# EUROPEAN PATENT APPLICATION

(11) **EP 3 795 644 A1**
(43) Date of publication of application: **24.03.2021**
(21) Application number: 19306150.4
(22) Date of filing: 20.09.2019
(51) Int. Cl.: C09C 1/00, C09D 125/14, C08K 3/22, C08K 3/36

(54) **PAINT COMPOSITIONS COMPRISING ZIRCONIUM DIOXIDE PIGMENT PARTICLES**

(71) Applicant: ImerTech SAS, 75015 Paris (FR)
(72) Inventor: Elton-Legrix, Anabelle, St. Austell, Cornwall PL26 7QL (GB); Priese, Angelika, 79837 St. Blasien (DE); Katholnig, Peter, 8580 Koflach (AT); Dollani, Helen, Krisamnell, Cornwall PI24 2EH (GB)
(74) Representative: Haseltine Lake Kempner LLP

(57) **Abstract**

The present invention relates to a paint composition comprising pigment particles, wherein the pigment particles have a median particle size, d₅₀, of from about 0.1 µm to about 1 µm as measured by sedimentation using a Sedigraph and comprise: i) at least about 70 weight percent of zirconium dioxide; ii) up to 15 weight percent of silica; iii) from about 0.1 to about 15 weight percent of one or more metal oxides selected from magnesium oxide, calcium oxide, yttrium oxide, scandium oxide, hafnium oxide, ytterbium oxide, aluminium oxide and cerium oxide; and iv) at least about 97 weight percent of a combination of i) ii) and iii), wherein the zirconium dioxide weight percent of i) is an equivalent zirconium dioxide weight percent as determined by XRF; the weight percent of the silica of ii) is an equivalent silica weight percentage as determined by XRF; the one or more metal oxide weight percent of iii) is an equivalent one or more metal oxide weight percent as determined by XRF; and wherein the weight percentages of i), ii), iii) and iv) are each based on the total weight of the pigment particles. The present invention is also relates to the use of the paint compositions herein and methods of preparation thereof.

## Description

### FIELD OF THE INVENTION

The present invention is directed to a paint composition comprising pigment particles, wherein the pigment particles have a median particle size, d₅₀, of from about 0.1 µm to about 1 µm as measured by sedimentation using a Sedigraph and comprise: i) at least about 70 weight percent of zirconium dioxide; ii) up to about 15 weight percent of silica; iii) from about 0.1 to about 15 weight percent of one or more metal oxides selected from magnesium oxide, calcium oxide, yttrium oxide, scandium oxide, hafnium oxide, ytterbium oxide, aluminium oxide and cerium oxide;; and iv) at least about 97 weight percent of a combination of i), ii) and iii), wherein the zirconium dioxide weight percent of i) is an equivalent zirconium dioxide weight percent as determined by XRF; the weight percent of the silica of ii) is an equivalent silica weight percentage as determined by XRF; the one or more metal oxide weight percent of iii) is an equivalent one or more metal oxide weight percent as determined by XRF; and wherein the weight percentages of i), ii) iii) and iv) are each based on the total weight of the pigment particles. The present invention is also directed to the use of the paint compositions herein and methods of preparation thereof.

### BACKGROUND OF THE INVENTION

Paint compositions are applied to substrates to form a solid thin layer film upon drying to colour, cover and protect objects. Amongst its components, paint compositions comprise pigments, where solid substances are dispersed throughout the coating to impart colour and/or opacity. Pigments may protect the substrate from UV light and may also change the appearance, such as gloss, and other properties, such as hardness and ductility.

The most commonly used white pigment in paints to achieve wet and dry opacity is titanium dioxide due to its whiteness and high refractive index. However, it is now desirable to produce paint compositions, which are substantially free of titanium dioxide. This is due to the expense and perceived environmental impact of titanium dioxide. Paint compositions that have low titanium dioxide or are substantially free of titanium dioxide typically have reduced opacity compared to paint compositions comprising substantial quantities of titanium dioxide.

Other white minerals have a high refractive index and could serve as an alternative to titanium dioxide in terms of aesthetic properties. Zinc oxide, for example, has a relatively high refractive index of 2.1. However, zinc oxide in unsuitable for use in paint compositions as it is not allowed in certain jurisdictions in levels above 500 ppm due to health and safety concerns. Zinc sulfide, with a high refractive index of approximately 2.4, is also unsuitable due to health and safety concerns, such as its role as a skin and respiratory sensitizer. It is therefore desirable to provide alternative pigments to replace titanium dioxide in paint compositions, which provide good aesthetic properties whilst avoiding the environmental impact associated with titanium dioxide.

### SUMMARY OF THE DISCLOSURE

The present invention is defined in the appended claims.

In accordance with a first aspect, there is provided a paint composition comprising pigment particles, wherein the pigment particles have a median particle size, d₅₀, of from about 0.1 µm to about 1 µm as measured by sedimentation using a Sedigraph and comprise:
ii) at least about 70 weight percent of zirconium dioxide;
ii) up to about 15 weight percent of silica;
iii) from about 0.1 to about 15 weight percent of one or more metal oxides selected from magnesium oxide, calcium oxide, yttrium oxide, scandium oxide, hafnium oxide, ytterbium oxide, aluminium oxide and cerium oxide; and
iv) at least about 97 weight percent of a combination of i), ii) and iii),
wherein the zirconium dioxide weight percent of i) is an equivalent zirconium dioxide weight percent as determined by XRF; the weight percent of the silica of ii) is an equivalent silica weight percentage as determined by XRF; the one or more metal oxide weight percent of iii) is an equivalent one or more metal oxide weight percent as determined by XRF; and wherein the weight percentages of i) ii) iii) and iv) are each based on the total weight of the pigment particles.

In accordance with a second aspect, there is provided a method of making the paint composition according to the first aspect comprising blending the pigment particles and other components of the paint composition.

In accordance with a third aspect there is provided a use of a paint composition according to the first aspect for coating an article or a substrate.

In accordance with a fourth aspect is provided a method for coating an article or substrate comprising coating said article or substrate with the paint composition according to the first aspect.

In accordance with a fifth aspect is provided an article or substrate coated with a paint composition according to the first aspect.

Certain embodiments of the present invention can provide one or more of the following advantages:
- desired aesthetic properties of paint, such as wet opacity;
- desired aesthetic properties of paint, such as dry opacity;
- desired aesthetic properties of paint, such as gloss;
- desired aesthetic properties of paint, such as brightness;
- desired physical properties of coating, such as hardness;
- desired physical properties of coating, such as scrub resistance;
- desired physical properties of coating, such as anti-cracking;
- desired lack of toxicity.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

The present invention is based on the finding that optimised zirconium dioxide can be used in paint compositions to provide good aesthetic properties, such as providing good coverage and opacity.

Zirconium dioxide, ZrO₂, also known as zirconia, is a white crystalline oxide of zirconium. Naturally occurring zirconium dioxide is predominantly in the form of a monoclinic crystalline structure, which is the expected structure at a temperature of below 1170 °C. At a temperature between 1170 °C and 2370 °C, zirconium dioxide is present in tetragonal form and present in cubic form above 2370 °C. Zirconia may also be produced by known methods, such as calcining zirconium compounds. The inclusion of yttria (Y₂O₃) in the structure of the ZrO₂ can serve to stabilize such structure in the cubic form at temperatures below 2370 °C.

Unless otherwise stated, the "weight percent" as disclosed and used herein is an equivalent weight percent as determined by XRF. For example, the zirconium weight percent disclosed herein is an equivalent zirconium dioxide weight percent as determined by XRF and the one or more metal oxides weight percent is an equivalent one or more metal oxide weight percent as determined by XRF. The weight percent is determined by Chemical analysis of refractory products by X-ray fluorescence (XRF) - Fused cast-bead method (ISO 12677:2011).

### Pigment Particle Composition

In accordance with any of the embodiments of the present disclosure described herein, the pigment particles of the present disclosure comprise, consist of, or consist essentially zirconium dioxide in an amount of at least about 70 weight percent based on the total weight of pigment particles. In certain embodiments, the pigment particles can comprise zirconium dioxide in an amount of at least about 75 weight percent, or at least about 78 weight percent, at least about 80 weight percent, at least about 85 weight percent, or at least about 87 weight percent, or at least about 90 weight percent, or at least about 92 weight percent, or at least about 95 weight percent, or at least about 96 weight percent, or at least about 97 weight percent, or at least about 98 weight percent, or at least about 99 weight percent, or at least about 99.5 weight percent, based on the total weight of pigment particles.

The pigment particles of the present invention further comprise silica in an amount up to about 15 weight percent based on the total weight of the pigment particles. For example the pigment particles can comprise up to about 14 weight percent silica, or up to about 13 weight percent silica, or up to about 12 weight percent silica, or up to about 11 weight percent silica, or up to about 10 weight percent silica, or up to about 9 weight percent silica, or up to about 8 weight percent silica, or up to about 7 weight percent silica, or up to about 6 weight percent silica, or up to about 5 weight percent silica, or up to about 4 weight percent silica, or up to about 3 weight percent silica, or up to about 2 weight percent silica, or up to about 1 weight percent silica, or at least about 0.1 weight percent silica, or at least about 0.2 weight percent silica, or from about 0.1 to about 10 weight percent of silica, or from about 0.1 to about 7 weight percent of silica, or from about 0.2 to about 5 weight percent of silica, or from about 0.2 to about 3 weight percent of silica based on the total weight of pigment particles.

The pigment particles of the present invention further comprise one or more metal oxides in an amount from about 0.1 to about 15 weight percent based on the total weight of the pigment particles. In certain embodiments, the pigment particles can comprise one or more metal oxides in an amount of from about 0.2 to about 14 weight percent, or from about 0.3 to about 13 weight percent, or from about 0.5 to about 12 weight percent, or from about 0.7 to about 11 weight percent, or from about 1 to about 10 weight percent, or from about 1.5 to about 9 weight percent, or from about 2 to about 8 weight percent, or from about 3 to about 7 weight percent, or from about 4 to about 6 weight percent based on the total weight of the pigment particles.

In certain embodiments the metal oxides comprise, consist of, or consist essentially of oxides selected from magnesium oxide, calcium oxide, yttrium oxide, scandium oxide, hafnium oxide, ytterbium oxide, aluminium oxide and cerium oxide, and combinations thereof. In one example, the pigment particles can comprise, consist of, or consist essentially of zirconium dioxide and hafnium dioxide. In a further example, the pigment particle can comprise, consist of, or consist essentially of zirconium dioxide, hafnium dioxide and yttrium oxide.

In certain embodiments the pigment particles can comprise from about 0.01 to about 2.5 weight percent of hafnium dioxide, or from about 0.05 to about 2.0 weight percent of hafnium dioxide, or from about 0.1 to about 1.5 weight percent of hafnium dioxide, or from about 0.5 to about 1.0 weight percent of hafnium dioxide, or from about 0.6 to about 0.8 weight percent of hafnium dioxide, or from about 0.1 to about 0.3 weight percent of hafnium dioxide, or from about 1.5 to about 2.0 weight percent of hafnium dioxide based on the total weight of the pigment particles.

In certain embodiments the pigment particles can comprise from about 0.01 to about 14.99 weight percent of yttrium dioxide, or from about 0.05 to about 14.5 weight percent of yttrium dioxide, or from about 0.1 to about 14 weight percent of yttrium dioxide, or from about 0.5 to about 13 weight percent of yttrium dioxide, or from about 1 to about 12 weight percent of yttrium dioxide, or from about 2 to about 11 weight percent of yttrium dioxide, or from about 3 to about 10 weight percent of yttrium dioxide, or from about 4 to about 9 weight percent of yttrium dioxide, or from about 5 to about 8 weight percent of yttrium dioxide, or from about 6 to about 7 weight percent of yttrium dioxide based on the total weight of pigment particles. In one example the pigment particle comprises monoclinic zirconium dioxide and up to about 2 weight percent of yttrium dioxide based on the total weight of pigment particles. In one example the pigment particle comprises stabilised zirconium dioxide and up to about 5 weight percent of yttrium dioxide based on the total weight of pigment particles. An yttrium dioxide content of about 5 weight percent may provide partial stabilisation of the cubic structure. In one example the pigment particle comprises stabilised zirconium dioxide and up to about 12 weight percent of yttrium dioxide based on the total weight of pigment particles. An yttrium dioxide content of about 12 weight percent may provide full or essential full stabilisation of the cubic structure.

In certain embodiments the pigment particles comprise less than about 0.05 weight percent ferric oxide as determined by XRF and based on the total weight of the pigment particles. For example, the pigment particles may comprise less than about 0.04 weight percent ferric oxide, or less than about 0.03 weight percent ferric oxide, or less than about 0.02 weight percent ferric oxide, or less than about 0.01 weight percent ferric oxide, as determined by XRF and based on the total weight of the pigment particles.

The pigment particles comprise zirconium dioxide according to the present invention and one or more metal oxides according to the present invention in a combined amount of at least about 97 weight percent, or at least about 97.5 weight percent, or at least about 98 weight percent, or at least about 98.5 weight percent, or at least about 99 weight percent, or at least about 99.5 weight percent, or at least about 99.9 weight percent based on the total weight of the total weight of the pigment particles.

In certain embodiments at least a portion of the zirconium dioxide and a least a portion of the one or more metal oxides can be present in the pigment particles as a mixture. In such a mixture, the zirconium dioxide and metal oxides are combined to form the pigment particle, wherein each component remains individually distinct.

In certain embodiments at least a portion of the zirconium dioxide and a least a portion of the one or more metal oxides can be present in the pigment particles as components of a metal-oxide structure. In the metal-oxide structure, the zirconium dioxide and one or more metal oxides form an integrated structure, wherein the components are not individually distinct. In certain embodiments the metal-oxide structure can be a crystal structure. In certain embodiments the metal-oxide structure can be monoclinic, tetragonal, cubic or mixtures thereof. In certain embodiments the metal-oxide can be monoclinic. In certain embodiments, the metal-oxide structure can be monoclinic and comprises at least about 97 weight percent of zirconium dioxide as determined by XRF and based on the total weight of the pigment particle. In certain embodiments the metal-oxide structure can be monoclinic and comprises at least about 97.5 weight percent of zirconium dioxide, or can be monoclinic and comprises at least about 98 weight percent of zirconium dioxide, or is monoclinic and comprises at least about 98.5 weight percent of zirconium dioxide, or is monoclinic and comprises at least about 99 weight percent of zirconium dioxide, or is monoclinic and comprises at least about 99.5 weight percent of zirconium dioxide based on the total weight of the pigment particle. In certain embodiments the metal-oxide can be tetragonal. In certain embodiments the metal-oxide can be cubic.

### Particle size

The pigment particles of the present invention have a median particle size, d₅₀, of from about 0.1 µm to about 1 µm as measured according to the Sedigraph method. In certain embodiments the pigment particles can have a median particle size, d₅₀, of from about 0.15 µm to about 1 µm, or from about 0.2 µm to about 1 µm, or from about 0.2 µm to about 0.8 µm, or from about 0.2 µm to about 0.6 µm, or from about 0.3 µm to about 0.5 µm as measured according to the Sedigraph method. In certain embodiments the pigment particles can have a median particle size, d₅₀, of up to about 1.0 µm, or up to about 0.8 µm, or up to about 0.6 µm, or up to about 0.4 µm, as measured according to the Sedigraph method. In certain embodiments the pigment particles can have a median particle size, d₅₀, of at least about 0.10 µm or of at least about 0.12 µm, or of at least about 0.17 µm, or of at least about 0.22 µm, or of at least about 0.27 µm, or of at least about 0.32 µm, or of at least about 0.37 µm. In certain embodiments the pigment particles can have a median particle size, d₅₀, of up to about 0.52 µm, or up to about 0.57 µm, or up to about 0.62 µm, or up to about 0.67 µm, or up to about 0.72 µm, up to about 0.77 µm, as measured according to the Sedigraph method.

The median equivalent particle diameter (d₅₀ value) and other particle size properties referred to herein for the pigment particles are as measured in a well-known manner by one of two methods. One method involves measurement in a well-known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the equivalent spherical diameter' (esd), less than given esd values. The median particle size d₅₀ is the value determined in this way of the particle esd at which there are 50% by weight of the particles which have an equivalent spherical diameter less than that d₅₀ value. A further method involves measurement by laser light scattering using, for example, Malvern Mastersizer S machine as supplied by Malvern Instruments Ltd (or by other methods which give essentially the same result). In the laser light scattering technique, the size of the particles in powders, suspensions and emulsions may be measured using the diffraction of a laser beam, based on an application of Mie theory.

In certain embodiments the brightness of the pigment particles can be at least 85 as measured according to ISO 2470-2 using D65 illuminant. For example, the brightness of the pigment particle can be at least 87, or at least 90, or at least 92, or at least 95, or at least 97 as measured according to ISO 2470-2.

### Paint composition

In certain embodiments, the pigment particles can be present in the paint compositions in an amount from about 1 to about 10 weight percent, or from about 1 to about 8 weight percent, or from about 1 to about 6 weight percent, or from about 2 to about 9 weight percent, or from 3 to about 7 weight percent, or from about 4 to about 5 weight percent, based on the total weight of the paint composition.

In certain embodiments the dry opacity of the paint composition at 8 m²/l can be at least 95% as measured according to ISO 6504-3. For example, the dry opacity of the paint composition at 8 m²/l can be at least 96%, or at least 97%, or at least 98%, or at least 99% as measured according to ISO 6504-3.

In certain embodiments the wet opacity of the paint composition at 8 m²/l can be at least 75%. The wet opacity is as measured according ISO 6504-3, which is adapted to omit the final drying step. For example, wet opacity of the paint composition at 8 m²/l can be at least 77%, or at least 80%, or at least 82%, or at least 85%, or at least 87%, or at least 90%, or at least 92%, or at least 95%, or at least 97%, or at least 99% as measured according to ISO 6504-3 adapted to omit the final drying step.

In certain embodiments the whiteness of the paint composition at 8 m²/l can be at least 95% as measured following the ISO 6504-3 for dry opacity and using CIE whiteness index L*. For example, the CIE whiteness of the paint composition at 8 m²/l can be at least 95.5, or at least 95.7, or at least 96, or at least 96.2, or at least 97, or at least 97.5, or at least 98, or at least 98.5, or at least 99, or at least 99.5 as measured according to ISO 6504-3.

The paint composition according to the invention can comprise a resin, such as a polymer resin or an oligomer resin, a defoamer (also known as an anti-foaming agent), a cross linker, a dispersant (also known as a dispersing agent), a coalescent agent, an adhesion propter, a wetting agent, a rheological agent, a light stabiliser and/or a UV absorber. For example, the polymer resin can be suitable for forming a homopolymer or a copolymer. Suitable examples comprise polyacrylates, polyesters, polyamides, polyurethanes, polyimides, polyurea, polyethers, polysilicones, fatty acid esters, as well as amine, alcohol, acid, ketone, ester, fluorinated, and aromatic functionalized versions of these polymer resins and physical blends and copolymers of the same. Polymer resins with respect to the total weight of the paint composition can be present in an amount between about 5 wt% and about 95 wt%, or between about 10 wt% and about 95 wt%, or between about 20 wt% to about 85 wt%, or between about 30 wt% to about 75 wt%, or between about 40 wt% to about 65 wt%, or between about 50 wt% to about 80 wt%, or between about 10 wt% and about 20 wt%.

Suitable defoamers include, for example, blends of surfactants, tributyl phosphate, fatty polyoxyethylene esters plus fatty alcohols, fatty acid soaps, silicone emulsions and other silicone containing compositions, waxes and inorganic particulates in mineral oil, blends of emulsified hydrocarbons and other compounds sold commercially as defoamers. Suitable coalescent agents include, for example, ester alcohols, hydrophilic glycol ethers, for example the Dowanol® range such as Dowanol® DPM and Dowanol® DPnB, hydrophobic glycol ethers and blockcopolymers. Suitable dispersants include polyacrylates, such as polyacrylate ammonium salts, the Dispex® range, hydrophilic blockcopolymer, acrylic block copolymer and non-ionic surfactants. Suitable rheology agents, or thickeners, include cellulose-derived rheology modifiers, for example, microfibrillated cellulose, hydroxymethyl cellulose, hydroxyethyl cellulose, hydroxypropyl cellulose, hydroxypropylmethyl cellulose, carboxymethyl cellulose or a mixture thereof. Suitable non-cellulose-derived rheology modifiers include one or more of emulsion copolymers, dicyanamide, triols, polyoxyethylene ether, urea, sulphated castor oil, polyvinyl pyrrolidone, sodium alginate, xanthan gum, and sodium silicate.

In certain embodiments the paint composition according to the invention can comprise titanium dioxide in an amount up to about 1.0 weight percent, or in an amount up to 0.8 weight percent, or in an amount up to 0.6 weight percent, or in an amount up to 0.4 weight percent or in an amount up to 0.2 weight percent, or in an amount up to 0.1 weight percent, or in an amount up to 0.05 weight percent based on the total weight of the paint composition.

The paint composition according to the present invention is suitable for application on a range of articles or substrates. Suitable substrates include wood, plastic, metal. Methods for coating the articles are known to the skilled person and include brushing and spraying.

In certain embodiments, the paint composition may have one or more of the following properties:
- good wet opacity;
- good dry opacity;
- good whiteness;
- low yellowness
- good scrub resistance
- good stain resistance
- good protection against ultraviolet light;
- avoidance of the use of environmentally harmful and/or controlled compounds.

For the avoidance of doubt, the present application is directed to subject-matter described in the following numbered paragraphs.
1. A paint composition comprising pigment particles, wherein the pigment particles have a median particle size, d₅₀, of from about 0.1 µm to about 1 µm as measured by sedimentation using a Sedigraph and comprise:
   i) at least about 70 weight percent of zirconium dioxide;
   ii) up to about 15 weight percent of silica;
   iii) from about 0.1 to about 15 weight percent of one or more metal oxides selected from magnesium oxide, calcium oxide, yttrium oxide, scandium oxide, hafnium oxide, ytterbium oxide, aluminium oxide and cerium oxide; and
   iv) at least about 97 weight percent of a combination of i), ii) and iii),
   wherein the zirconium dioxide weight percent of i) is an equivalent zirconium dioxide weight percent as determined by XRF; the weight percent of the silica of ii) is an equivalent silica weight percentage as determined by XRF; the weight percent of the one or more metal oxide of iii) is an equivalent one or more metal oxide weight percent as determined by XRF; and wherein the weight percentages of i) ii) iii) and iv) are each based on the total weight of the pigment particles.
2. The paint composition according to numbered paragraph 1, wherein at least a portion of the zirconium dioxide and at least a portion of the one or more metal oxides are present in the pigment particles as a mixture.
3. The paint composition according to numbered paragraph 1 or 2, wherein at least a portion of the zirconium dioxide and at least a portion of the one or more metal oxides are present in the pigment particles as components of a metal-oxide structure.
4. The paint composition according to numbered paragraph 3, wherein the metal-oxide structure is monoclinic, tetragonal, cubic or mixtures thereof.
5. The paint composition according to numbered paragraph 3 or numbered paragraph 4, the metal-oxide structure is monoclinic and comprises at least about 97 weight percent of zirconium dioxide as determined by XRF and based on the total weight of the pigment particles.
6. The paint composition according any preceding numbered paragraph, wherein the pigment particles comprise from about 0.01 to about 2.5 weight percent of hafnium oxide as determined by XRF and based on the total weight of the pigment particles.
7. The paint composition according to any preceding numbered paragraph, wherein the pigment particles comprise from about 0.01 to about 14.99 weight percent of yttrium dioxide as determined by XRF and based on the total weight of the pigment particles.
8. The paint composition according to any preceding numbered paragraph, wherein the pigment particles comprise at least about 99 weight percent of a combination of the zirconium dioxide, the silica, and the one or more metal oxides as determined by XRF and based on the total weight of the pigment particles.
9. The paint composition according to any preceding numbered paragraph, wherein the pigment particles comprise less than about 0.05 weight percent of ferric oxide as determined by XRF and based on the total weight of the pigment particles.
10. The paint composition according to any preceding numbered paragraph, wherein the brightness of the pigment particles is at least 85 as measured according to ISO 2470-2.
11. The paint composition according to any preceding numbered paragraph, wherein the dry opacity of the paint composition at 8 m²/l is at least 95% as measured according to ISO 6504-3.
12. The paint composition according to any preceding numbered paragraph, wherein the wet opacity of the paint composition at 8 m²/l is at least 75% as measured according to ISO 6504-3 adapted to omit the final drying step.
13. The paint composition according to any preceding numbered paragraph, wherein the pigment particles are present in an amount of about 1 to 10 weight percent based on the total weight of the paint composition.
14. The paint composition according to any preceding numbered paragraph, further comprising one or more of a polymer resin, a defoamer, a cross-linker, a dispersant, a coalescent agent, an adhesion promoter, a wetting agent, a rheological agent, a light stabiliser and/or a UV absorber.
15. The paint composition according to any preceding numbered paragraph, comprising titanium dioxide in an amount of about 1.0 weight percent or less based on the total weight of the paint composition.
16. A method of making the paint composition according to any one of numbered paragraphs 1 to 15 comprising blending the pigment particles and other components of the paint composition.
17. Use of a paint composition according to any one of numbered paragraphs 1 to 15 for coating an article or a substrate.
18. A method for coating an article or substrate comprising coating said article or substrate with the paint composition according to any one of numbered paragraphs 1 to 15.
19. An article or substrate coated with a paint composition according to any one of numbered paragraphs 1 to 15.

### EXAMPLES

Pigment particles with the combination of components shown in Table 1 were prepared and tested as disclosed in the following.

Pigment samples a and h of table 1 are monoclinic and were produced by chemical precipitation from zirconium oxychloride (ZrOCl₂.8H₂O) by calcination at 900°C. Sample a was jet-milled and sample h was passed through a beater mill to achieve the respective particle sizes.

Pigment samples b, c and d were made using a high purity fused ZrO₂ sample, which were wet milled to form samples with three different particle sizes. The samples were then calcined at low temperature (450 °C) to remove the organic impurities. The resulting samples were then ground in the lab using a pestle and mortar.

Sample e is a tetragonal spray dried zirconia (JK-3Y-ZN) from Zheijiang Zirconia Industry Co. containing ∼3 mol% Y₂O₃ as a stabiliser according to its technical datasheet.

Samples f and g were made from fusing yttrium oxide and high purity monoclinic zirconia in an electric arc furnace above 2800°C. For sample f, 5 wt.% Y₂O₃ and 95% ZrO₂ was used and for sample g 13 wt.%, Y₂O₃ and 87 wt.% ZrO₂ was used. A 5 tonne batch was made for each sample and the fusion resulted in a large block which was cooled to room temperature within a week. The solid fused material was separated from any unfused material. The fused material was then crushed and ball-milled. A slurry was made and wet bead-milled to produce the final particle size. The slurry was then dried and calcined at low temperature (450 °C) to remove the organic impurities. Finally the calcined material was passed through a beater mill.

Sample i was made from a lower purity fused ZrO₂ sample, which was wet milled and then calcined at low temperature (450 °C) to remove the organic impurities. The resulting sample was passed through a beater mill.

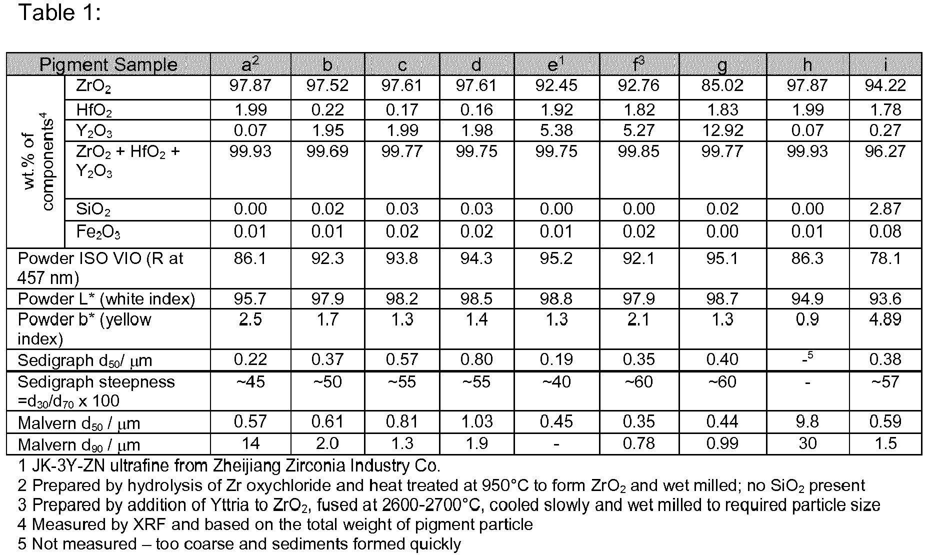

Pigment particle samples a to g are according to the invention and pigment samples h and i are comparative examples. Comparative example i, for example, comprises 0.08 weight percent ferric oxide and has a low powder VIO, low white index and high yellow index in comparison to all the pigment particles according to the invention.

### Paint preparation

Paint formulations according to Table 2 were prepared using the following steps:
- preparation of a mill base by the dispersion using a DAC-150 SpeedMixer of the TiO₂ pigment particle and/or ZrO₂ pigment particle and/or inorganic mineral extenders (e.g. calcined clay, PCC, talc and/or GCC) in a mixture comprising ammonia, Dispex A40, Natrosol 250 HR and water to achieve ∼60 wt.% target solids; and
- let down of the mill base to the finished paint by the addition of styrene acrylic binder, co-solvent (Texanol), thickener (Acrysol TT935) and water.

A ZrO₂ pigment particle of table 1 may be introduced at the mill base stage at either 2 wt.% or 4 wt.% equivalent dry solids as a pre-dispersed ZrO₂ powder in a water based slurry at 75 wt.% solids using 1.68 wt.% sodium polyacrylate dispersant (Dispex A40).

**Table 2¹:**

| Paint Formulation | A | B | C | D | E |
|---|---|---|---|---|---|
| Pigment Particle² | 0 | 0.5 | 1 | 2 | 4 |
| Calcined clay | 12 | 11.875 | 11.75 | 11.5 | 11 |
| PCC | 12 | 11.875 | 11.75 | 11.5 | 11 |
| Talc | 8 | 7.92 | 7.83 | 7.68 | 7.33 |
| GCC | 16 | 15.83 | 15.66 | 15.32 | 14.67 |
| Natrosol 250HR | 0.4 | 0.4 | 0.4 | 0.4 | 0.4 |
| Dispex A40 | 0.7 | 0.7 | 0.7 | 0.7 | 0.7 |
| Ammonia | 0.05 | 0.05 | 0.05 | 0.05 | 0.05 |
| Styrene acrylic binder | 11 | 11 | 11 | 11 | 11 |
| Texanol | 1.4 | 1.4 | 1.4 | 1.4 | 1.4 |
| Acrysol TT935 | 0.45 | 0.45 | 0.45 | 0.45 | 0.45 |
| Water | 38 | 38 | 38 | 38 | 38 |
| Paint % PVC³ | 77.8 | 77.8 | 77.7 | 77.5 | 77.1 |

| | | | | | |
|---|---|---|---|---|---|
| ¹All values except PVC are provided as weight percentages based on the total weight of the paint formulation ²In the present examples and comparative examples, the pigment particles used for paint formulations B & C is TiO₂, and for paint formulations D & E is ZrO₂ ³Pigment Volume Concentration | | | | | |

The paints were allowed to stand overnight in a controlled environment at 23 °C and 50% RH before being applied at various thicknesses onto either Leneta cards or Melinex (polyester film) substrates using either handheld or automatic drawdown bar. The optical performance of the paints were then determined.

### Wet opacity and dry opacity at a fixed spreading rate

The ISO 6504-3 method for "Paints and varnished - Determination of hiding power" was applied to obtain a normalised measurement of dry opacity per given paint film thickness or spreading rate. The applied wet film per unit area was weighed followed by measuring the opacity after the film had dried (dry opacity). A similar method was followed to measure the wet opacity, wherein the opacity was measured before drying the film. The wet opacity was measured using an X-Rite spectrophotometer and the dry contrast ratio or hiding powder using a Datacolor spectrophotometer.

The paints were applied at five different wet film thicknesses (between 100 and 200 µm) on a Leneta card, using either a handheld drawdown bar or an automatic bar using a Coatmaster 509MC Erichsen equipment. The paint card was weighted before and after applying the paint and the area covered by the paint was measured. The paint coverage in m²/l was calculated using the wet weight of the paint and its density. The wet opacity (100 x Ryb/Ryw) was measured after 60 second application using the X-Rite equipment. A polynomial function was applied to fit the five measurements (thicknesses) of opacity vs. paint coverage, assuming 100% opacity at zero spreading rate (infinite paint film thickness) in order to calculate the wet opacity at 8 m²/l spreading rate which corresponds to a 125 µm wet film thickness. Once the paint films were dried, the same method was used to calculate the dry opacity (100 x Ryb/Rvw) from the polynomial fit of five measurements and the measurements were carried out using a Datacolor spectrophotometer.

### Colour after drying at a fixed spreading rate

The ISO 6504-3 method was used as above and the CIE L*a*b* values of the dry coating was measured using Datacolor mode 600 spectrophotometer over the white background of the Leneta card. A linear fit of the whiteness L* and yellow index b* vs. spreading rate allowed the calculation of L* and b* at a given spreading rate of 8m²/l.

The above measurements were carried out on various paint formulations using the pigment particles of Table 1 formulated according to Table 2. The results from these measurements are shown in Table 3. Paint formulations using TiO₂ as the pigment particle rather than the pigment particles of Table 1 were also prepared for comparison, as also shown in Table 3.

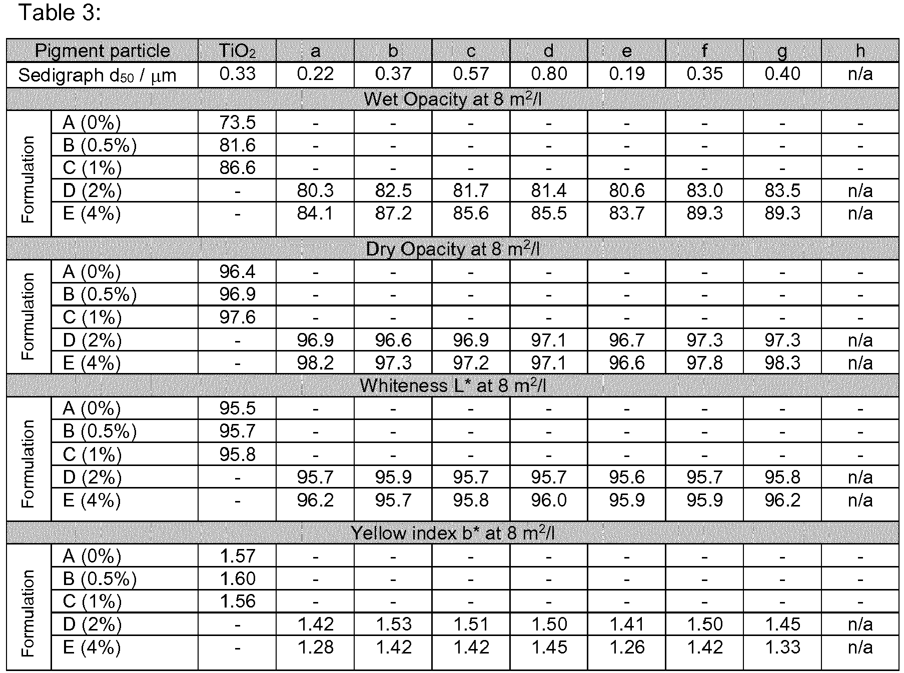

All examples a to g according to the invention, with pigment particle sizes d₅₀ as measured by Sedigraph shown in Table 3, provided paint compositions with better properties than paint formulations without pigment. For example, the paint formulations according to the invention provided significantly improved wet opacity. In each example, the wet opacity at 8 m²/l was above 80. At the same time, good result for dry opacity, whiteness and yellowness were obtained.

It was not possible to prepare a paint composition using the pigment particle according to comparative example h. Comparative example h has a large particle size (Malvern d₅₀ of 9.8; Sedigraph d₅₀: not possible to measure) and could not be successfully incorporated into the paint formulation. Attempts resulted in sample precipitation, hence comparative example h is unsuitable for inclusion in paint formulations.

Paint formulations using comparative example i were not prepared due poor properties such as poor brightness and high yellowness.

## Claims

1. A paint composition comprising pigment particles, wherein the pigment particles have a median particle size, d₅₀, of from about 0.1 µm to about 1 µm as measured by sedimentation using a Sedigraph and comprise:
i) at least about 70 weight percent of zirconium dioxide;
ii) up to about 15 weight percent of silica;
iii) from about 0.1 to about 15 weight percent of one or more metal oxides selected from magnesium oxide, calcium oxide, yttrium oxide, scandium oxide, hafnium oxide, ytterbium oxide, aluminium oxide and cerium oxide; and
iv) at least about 97 weight percent of a combination of i), ii) and iii),
wherein the zirconium dioxide weight percent of i) is an equivalent zirconium dioxide weight percent as determined by XRF; the weight percent of the silica of ii) is an equivalent silica weight percentage as determined by XRF; the weight percent of the one or more metal oxide of iii) is an equivalent one or more metal oxide weight percent as determined by XRF; and wherein the weight percentages of i) ii) iii) and iv) are each based on the total weight of the pigment particles.

2. The paint composition according to claim 1, wherein at least a portion of the zirconium dioxide and at least a portion of the one or more metal oxides are present in the pigment particles as a mixture.

3. The paint composition according to claim 1 or 2, wherein at least a portion of the zirconium dioxide and at least a portion of the one or more metal oxides are present in the pigment particles as components of a metal-oxide structure.

4. The paint composition according to claim 3, wherein the metal-oxide structure is monoclinic, tetragonal, cubic or mixtures thereof.

5. The paint composition according to claim 3 or claim 4, the metal-oxide structure is monoclinic and comprises at least about 97 weight percent of zirconium dioxide as determined by XRF and based on the total weight of the pigment particles.

6. The paint composition according any preceding claim, wherein the pigment particles comprise from about 0.01 to about 2.5 weight percent of hafnium oxide as determined by XRF and based on the total weight of the pigment particles.

7. The paint composition according to any preceding claim, wherein the pigment particles comprise from about 0.01 to about 14.99 weight percent of yttrium dioxide as determined by XRF and based on the total weight of the pigment particles.

8. The paint composition according to any preceding claim, wherein the pigment particles comprise at least about 99 weight percent of a combination of the zirconium dioxide, the silica, and the one or more metal oxides as determined by XRF and based on the total weight of the pigment particles.

9. The paint composition according to any preceding claim, wherein the pigment particles comprise less than about 0.05 weight percent of ferric oxide as determined by XRF and based on the total weight of the pigment particles.

10. The paint composition according to any preceding claim, wherein the pigment particles are present in an amount of about 1 to 10 weight percent based on the total weight of the paint composition.

11. The paint composition according to any preceding claim, further comprising one or more of a polymer resin, a defoamer, a cross-linker, a dispersant, a coalescent agent, an adhesion promoter, a wetting agent, a rheological agent, a light stabiliser and/or a UV absorber.

12. The paint composition according to any preceding claim, comprising titanium dioxide in an amount of about 1.0 weight percent or less based on the total weight of the paint composition.

13. A method of making the paint composition according to any one of claims 1 to 12 comprising blending the pigment particles and other components of the paint composition.

14. Use of a paint composition according to any one of claims 1 to 12 for coating an article or a substrate.

15. A method for coating an article or substrate comprising coating said article or substrate with the paint composition according to any one of claims 1 to 12.
